# FASCICULE DE BREVET EUROPEEN

(11) **EP 3 378 067 B1**
(45) Date de publication et mention de la délivrance du brevet: **27.11.2019**
(21) Numéro de dépôt: 16785400.9
(22) Date de dépôt: 14.10.2016
(51) Int. Cl.: G21C 17/116, G21C 13/036

(54) **ASSEMBLAGE DE PÉNÉTRATION ÉLECTRIQUE DE CUVE D'UN RÉACTEUR NUCLÉAIRE**
ELEKTRISCHE BEHÄLTERPENETRATIONSANORDNUNG FÜR EINEN KERNREAKTOR
VESSEL ELECTRICAL PENETRATION ASSEMBLY FOR A NUCLEAR REACTOR

(30) Priorité: 19.11.2015 FR 1561112
(43) Date de publication de la demande: 26.09.2018
(73) Titulaire: Société Technique pour l'Energie Atomique, 91190 Villiers Le Bacle (FR)
(72) Inventeur: BRUN, Michel, 13109 Simiane-Collongue (FR)
(74) Mandataire: Cabinet Camus Lebkiri
(86) Numéro de dépôt international: PCT/EP2016/074704
(87) Numéro de publication internationale: WO 2017/084815

(56) Documents cités:
- US-A- 3 780 204
- US-A- 4 235 674
- US-A1- 2013 287 157
- US-A1- 2013 301 777
- US-A1- 2014 198 891

## Description

### DOMAINE TECHNIQUE DE L'INVENTION

L'invention se rapporte au domaine des assemblages de pénétrations électriques traversant les cuves des réacteurs nucléaires (V-EPA pour Vessel Electrical Penetration Assembly en langue anglaise).

L'invention trouve une application particulièrement intéressante dans le domaine des réacteurs nucléaires intégrés et des petits réacteurs modulaires également appelé SMR (pour Small & Modular Reactor en langue anglaise) comportant de nombreux actionneurs/capteurs en cuve créant des besoins spécifiques de pénétrations électriques. Une application dans les réacteurs pressurisés conventionnels est possible.

### ETAT DE LA TECHNIQUE ANTERIEURE

Pour une application dans un SMR utilisant des actionneurs en cuve, ces pénétrations électriques de cuve doivent répondre à plusieurs critères. Elles doivent être démontables rapidement, souples pour être compatibles avec les dilatations différentielles entre la cuve et les internes, d'un diamètre utile significatif (diamètre typiquement de 30 à 50mm) afin d'être compatible avec le nombre et la puissance des liaisons électriques à assurer pour les actionneurs dans la cuve.

Dans le domaine des réacteurs à eau pressurisée, les solutions adoptées pour les liaisons d'instrumentation sont classiquement :
- des doigts de gants positionnés au travers de la cuve du réacteur. Les doigts de gant doivent alors constituer une extension de la seconde barrière réglementaire de confinement et sont par conséquent largement surdimensionnés, robustes, rigides, faiblement ou difficilement démontables, et présentent un diamètre limité pour limiter le débit de fuite en cas d'accident ;
- des raccords mécaniques de type « Swagelock® » raccordés sur des tubes traversants de faible diamètre recevant par exemple des thermocouples, l'ensemble constituant une extension de la second barrière de confinement.

Cependant, ces solutions sont peu transposables directement au domaine des SMR car, dans la pratique, elles ne répondent pas aux besoins de raccordement d'un actionneur de cuve d'un SMR. En effet le principe même du doigt de gant ne permet pas le caractère démontable au niveau de l'actionneur, ces solutions sont peu flexibles, et ont un diamètre utile limité à une valeur typique inférieure à 15mm.

Pour répondre aux besoins d'un SMR, approche consiste à mettre en place une extension de la seconde barrière au sein de la cuve jusque chaque capteur/actionneur pour l'ensemble des pénétrations électriques d'un SMR. Des illustrations de cette approche dans le cas particulier d'un SMR sont notamment décrites dans les documents US 20130287157 et US 2014198891. Ces documents décrivent la mise en place au sein de la cuve d'une bride d'instrumentation dédiée aux pénétrations électriques qui est démontable et qui regroupe une pluralité de doigts de gant requis pour les besoins spécifiques d'un SMR. La bride dédiée permet ainsi de déposer en une seule opération l'ensemble des pénétrations électriques. Cette approche, ne répond que partiellement au problème posé. D'une part, il peut être jugé pénalisant pour la conception d'ensemble du réacteur de rajouter une bride de cuve démontable avec le risque de fuite associé sur cet assemblage étanche de grand diamètre. D'autre part, le grand nombre de liaisons électriques requise par la mise en place d'actionneurs en cuve va conduire à adopter soit à un très grand nombre de doigts de gants de diamètre limité, soit à des doigts de gant de diamètre significativement supérieurs à ceux pratiqués à date, lesdits doigts de gant présentant un caractère démontable au niveau des actionneurs. Dans chacune de ces alternatives, ceci va compliquer la démonstration de sûreté, faire peser des contraintes sur l'inspection réglementaire desdites extension de seconde barrière.

### EXPOSE DE L'INVENTION

Dans ce contexte l'invention cherche à proposer un assemblage de pénétration électrique de cuve d'un réacteur nucléaire répondant aux besoins de raccordement électrique des nombreux actionneurs d'un SMR et permettant de respecter l'esprit des réglementations de conception imposés dans le domaine des réacteurs pressurisés et des SMR en particulier, à savoir la prévention de fuites primaires et la limitation des conséquences de défaillances éventuelles.

A cette fin, l'invention a pour objet un assemblage de pénétration électrique de cuve apte à être installé dans une traversée d'une cuve d'un réacteur nucléaire, ledit assemblage de pénétration électrique étant caractérisé en ce qu'il comporte :
- un tube d'accostage apte à former une extension de la seconde barrière de confinement du réacteur nucléaire, ledit tube d'accostage comportant :
   - une première extrémité apte à être positionnée à l'intérieur de la cuve et apte à être raccordée mécaniquement et de manière étanche à un aboutissant (actionneur ou capteur) à l'intérieur de ladite cuve ;
   - une deuxième extrémité apte à être solidarisée mécaniquement et de manière étanche à la cuve ;
- un barreau électrique étanche traversant ledit tube d'accostage et présentant de part et d'autre des connecteurs étanches assurant une liaison électrique entre ledit aboutissant et l'extérieur dudit réacteur ; ledit barreau électrique étanche présentant des moyens pour limiter une fuite de liquide primaire à l'extérieur de la cuve en cas de défaillance de ladite extension de seconde barrière de confinement ;
- des moyens de maintien mécanique pour solidariser aux conditions de pression requises, ledit barreau électrique à ladite cuve.

L'assemblage de pénétration électrique selon l'invention peut également présenter une ou plusieurs des caractéristiques ci-dessous prises individuellement ou selon toutes les combinaisons techniquement possibles :
- le barreau électrique comporte une enveloppe externe présentant une excroissance périphérique dont l'encombrement externe est dimensionné de manière à minimiser l'espace entre le tube d'accostage et le barreau électrique, l'excroissance périphérique formant lesdits moyens pour limiter le débit de fuite de liquide primaire entre le tube d'accostage et le barreau électrique en cas de défaillance de ladite extension de seconde barrière de confinement ;
- l'excroissance périphérique est positionnée de manière à limiter le débit de fuite de liquide primaire au niveau de la traversée de la cuve ;
- les moyens pour limiter une fuite de liquide primaire à l'extérieur de la cuve en cas de défaillance de ladite extension de seconde barrière de confinement sont formés par un moyen d'étanchéité agencé entre la cuve et le barreau électrique et par un moyen de détection de l'augmentation de pression à l'intérieur du tube d'accostage ;
- le tube d'accostage présente un diamètre interne supérieur à 30mm ;
- lesdits connecteurs étanches du barreau électrique présentent un isolant en céramique ou un isolant en vitrocéramique précontrainte ;
- le tube d'accostage comporte au moins une partie rigide et une partie flexible apte à se déformer au moins selon une direction ;
- ledit tube d'accostage est solidarisé mécaniquement et de manière étanche à l'extérieure de ladite cuve ;
- ledit tube d'accostage est solidarisé mécaniquement et de manière étanche à l'intérieur de ladite cuve ;
- le tube d'accostage est démontable ;
- le barreau électrique comporte une enveloppe externe, l'enveloppe externe présentant au moins une partie rigide et une partie flexible apte à se déformer au moins selon une direction.

L'invention a également pour objet une cuve de réacteur nucléaire caractérisée en ce qu'elle comporte au moins un assemblage de pénétration électrique selon l'invention.

L'invention a également pour objet un réacteur nucléaire comportant une cuve selon l'invention.

Avantageusement, le réacteur nucléaire est un réacteur intégré ou un petit réacteur modulaire.

### BREVE DESCRIPTION DES FIGURES

D'autres caractéristiques et avantages de l'invention ressortiront à la lecture de la description qui suit, en référence aux figures annexées.
La figure 1 illustre une vue en section d'une partie de cuve d'un réacteur nucléaire présentant un premier mode de réalisation d'un assemblage de pénétration électrique de cuve selon l'invention.
La figure 2 illustre une vue en section d'une partie de cuve d'un réacteur nucléaire présentant un deuxième mode de réalisation d'un assemblage de pénétration électrique de cuve selon l'invention.
La figure 3 illustre une vue en section d'une partie de cuve d'un réacteur nucléaire présentant un troisième mode de réalisation d'un assemblage de pénétration électrique de cuve selon l'invention.
Les termes « amont » et « aval » utilisés dans la demande de brevet sont définis en considérant le sens d'écoulement du fluide primaire en cas de fuite, c'est-à-dire de l'intérieur vers l'extérieur de la cuve 10.

### DESCRIPTION DETAILLEE D'UN MODE DE REALISATION

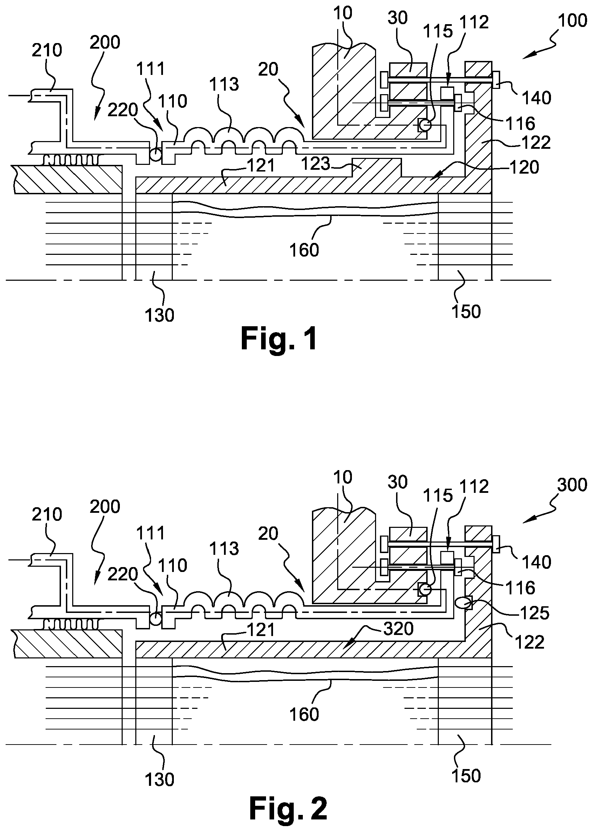

La figure 1 illustre une vue en coupe d'un premier exemple de réalisation d'un assemblage de pénétration électrique de cuve (V-EPA pour Vessel Electrical Penetration Assembly) selon l'invention installée dans une traversée 20 d'une cuve 10 d'un réacteur nucléaire, de type intégré ou encore SMR.

L'assemblage de pénétration électrique de cuve 100 comporte un tube d'accostage 110. Le tube d'accostage 110 présente une première extrémité 111, dite extrémité interne, destinée à être positionnée à l'intérieur de la cuve 10 du réacteur nucléaire et raccordée mécaniquement et de manière étanche à l'enveloppe extérieure 210 de l'aboutissant (actionneur ou capteur) 200 positionné à l'intérieur de la cuve 10, et une deuxième extrémité 112, dite extrémité externe, destinée à être solidarisée de manière étanche à la cuve 10 du réacteur.

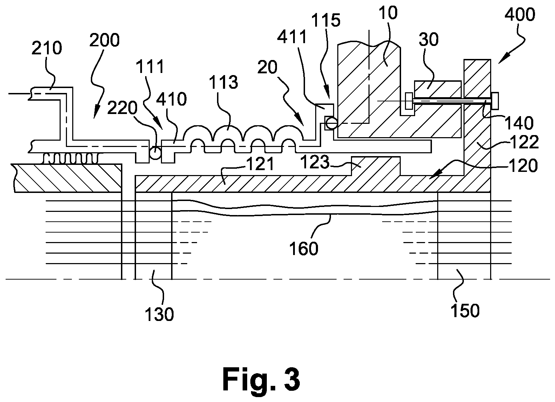

Dans le premier exemple de réalisation illustré à la figure 1, le tube d'accostage 110 est inséré par l'extérieur de la cuve 10. A cet effet, l'extrémité externe 112 du tube d'accostage forme une bride de maintien apte à être solidarisée mécaniquement via des moyens de maintien 116 sur une manchette de cuve 30 comme illustré à la figure 1. Bien entendu, d'autres implémentations sont possibles comme par exemple par l'intérieur de la cuve comme illustré à la figure 3, dont le mode de réalisation sera détaillé par la suite.

Bien entendu, il est prévu des moyens d'étanchéité 115 ad-hoc entre la manchette de cuve 30 et le tube d'accostage 110, et plus particulièrement entre l'extrémité externe 112 du tube d'accostage 110, permettant de réaliser une étanchéité entre la cuve 10 et le tube d'accostage 110 lors de son montage.

Le tube d'accostage 110 présente avantageusement une zone de souplesse 113 autorisant ainsi une certaine flexibilité (par exemple dans le sens longitudinal de la traversée 20) du tube d'accostage 110 à l'intérieur de la cuve 10 du réacteur nucléaire, permettant notamment de compenser les dilatations différentielles des différentes parties du montage.

Le tube d'accostage 110 est dimensionné de manière à être qualifié pour résister aux conditions de température et de pression du liquide primaire. La liaison mécanique 220 entre le tube d'accostage 110 et l'enveloppe extérieure 210 de l'actionneur 200 est également une liaison permettant de résister aux conditions du liquide primaire. A titre d'exemple, cette liaison mécanique 220 peut être réalisée par un montage à bride inversée serrée par l'intérieur du tube d'accostage 110 sur un joint métallique.

L'enveloppe extérieure 210 de l'actionneur 200 est également conçue et qualifiée pour être étanche aux conditions de température et de pression du liquide primaire.

Le tube d'accostage 110 présente un diamètre utile significatif, typiquement supérieur à 30mm permettant le passage d'une liaison électrique constituée de 10 à 20 de points de contact dont des contacts de puissance pour les actionneurs.

Le tube d'accostage 110 est ainsi assimilable à une extension de la seconde barrière de confinement du réacteur nucléaire (représentée en pointillés sur la figure 1), démontable, flexible et présentant un diamètre significatif pour le passage des nombreuses liaisons électriques. Toutefois, compte tenu du diamètre significatif de ce tube d'accostage 110, l'utilisation unique de ce tube d'accostage 110 ne serait pas admissible dans une analyse de sûreté en prenant en compte les probabilités de défaillance et les conséquences des brèches résultantes. En effet, en cas de défaillance d'étanchéité du tube d'accostage 110 ou encore de la liaison mécanique 220 entre l'actionneur 200 et le tube d'accostage 110, le débit de fuite du liquide primaire serait très important et pénalisant dans l'analyse de sûreté.

C'est pourquoi, l'assemblage de pénétration électrique de cuve 100 comporte également en son centre un barreau électrique 120 s'étendant à l'intérieur du tube d'accostage 110. Le barreau électrique 120 est avantageusement démontable du tube d'accostage 110 par l'extérieur de la cuve 10.

Le barreau électrique 120 a pour fonction d'assurer la continuité électrique entre l'actionneur 200 et un câble (non représenté) situé à l'extérieur de la cuve 10. Le barreau électrique 120 comporte une enveloppe externe 121 formant un tube, par exemple en inox, renfermant une pluralité de câbles électriques 160 assurant le raccordement électrique de part et d'autre du barreau électrique 120 et plus précisément entre un premier connecteur étanche 130 et un deuxième connecteur étanche 150 positionnés au niveau des extrémités du barreau électrique 120. Les câbles électriques 160 à l'intérieur du barreau électrique 120 sont ainsi rendus indémontables. Les câbles électriques 160 sont par exemple des câbles minéraux qualifiés aux conditions de température du primaire.

Les connecteurs étanches 130, 150 sont solidarisés, par exemple au moyen de soudures étanches, au niveau des extrémités du barreau électrique 120. Ainsi, le barreau électrique 120 présente une étanchéité longitudinale aux conditions de pression et de température du liquide primaire.

Le diamètre des connecteurs 130, 150 et le nombre de broches les constituants sont fixés par le besoin fonctionnel (i.e. en fonction du nombre de fils et de l'isolation nécessaires). Les connecteurs étanches 130, 150 ainsi utilisés dans un réacteur nucléaire intégré présentent typiquement un diamètre compris entre 30mm et 50mm.

Les connecteurs étanches 130 et 150 sont des connecteurs électriques utilisant une technologie céramique ou une technologie de vitrocéramique précontrainte pour assurer l'étanchéité de part et d'autre du barreau électrique 120. Les connecteurs étanches 130, 150 sont des connecteurs qualifiés pour tenir aux conditions du liquide primaire, mais ils ne sont pas soumis à la réglementation applicable aux dispositifs de la seconde barrière de confinement car grâce à l'assemblage de pénétration électrique de cuve 100 selon l'invention, ils ne participent pas à la réalisation de cette seconde barrière de confinement et ne sont sollicités qu'en cas de défaillance de l'extension (110 et/ou 220 et/ou 210)

Outre la fonction électrique, le barreau électrique 120 a également pour fonction de combler l'espace interne du tube d'accostage 110 et ainsi de limiter le débit de fuite du liquide primaire en cas de défaillance potentielle de l'étanchéité de l'extension de la seconde barrière de confinement (représentée par la ligne en pointillés sur la figure 1). Dans ce premier mode de réalisation, le barreau électrique 120 est dimensionné de sorte que son encombrement externe permette un montage dans le tube d'accostage 110 tout en minimisant l'espace résiduel entre l'enveloppe externe 121 du barreau électrique 120 et le tube d'accostage 110. A titre d'exemple, le barreau électrique 120 comporte sur son enveloppe extérieure 121 un bossage périphérique 123 dont la fonction est d'autoriser un chemin de fuite limité et maitrisé du liquide primaire en cas de défaillance potentielle de l'étanchéité de l'extension de la seconde barrière de confinement (représentée par la ligne en pointillés sur la figure 1). Le chemin de fuite est ainsi limité à la section annulaire entre le diamètre interne du tube d'accostage 110 et le diamètre externe maximal du barreau électrique 120, formé ici par le bossage périphérique 123.

Le bossage périphérique 123 peut être isolé sur une partie de l'enveloppe externe 121 de barreau électrique 120 comme représenté à la figure 1, mais il est également prévu d'étendre le bossage périphérique sur grande partie de ladite enveloppe externe 121 ou encore de prévoir une pluralité de bossages périphériques 123 pouvant être répartis sur la longueur de l'enveloppe externe 121 se trouvant à l'intérieur du tube d'accostage 110. Avantageusement, le tube d'accostage 110 présente au moins un bossage périphérique 123 au niveau de la traversée 20 de la cuve 10.

Les différents composants du barreau électrique 120 décrits précédemment sont assemblés de manière indissociable (par exemple par soudure) pour constituer un barreau électrique monobloc et démontable indépendamment du tube d'accostage 110.

Le barreau électrique 120 comporte, au niveau de l'extrémité extérieure de l'enveloppe externe 121, une virole annulaire 122 formant ainsi une bride de maintien permettant de solidariser le barreau électrique 120 par l'extérieur de la cuve 10 via des moyens de maintien 140 assurant son maintien mécanique. Avantageusement, les moyens de maintien mécanique 140 sont formés par la coopération de vis et d'écrous résistant aux conditions de pression requises, formant ainsi un dispositif d'anti-éjection du barreau électrique 120 en cas de fuite de l'extension de seconde barrière.

Les moyens de maintien mécanique 116 solidarisant mécaniquement le tube d'accostage 110 sur la cuve 10 sont également formés par la coopération de vis et d'écrous.

Selon une alternative de réalisation non représenté, il est possible de solidariser mécaniquement le tube d'accostage 110 ainsi que le barreau électrique 120 avec des moyens de maintien mécanique commun. Dans cette alternative de réalisation, le corps de la vis des moyens de maintien traverse avantageusement à la fois la virole annulaire 122 du barreau électrique 120, l'extrémité externe 112 du tube d'accostage 110, et la manchette de cuve 30.

L'assemblage de pénétration électrique 100 ainsi présenté, permet de remplir les besoins fonctionnels d'un assemblage de pénétration électrique d'un réacteur intégré tout en répondant aux critères de sûreté nucléaire et d'analyses de sûreté. Avec l'assemblage de pénétration électrique 100 selon l'invention, en cas de défaillance de l'extension de la seconde barrière de confinement représentée par la ligne en pointillés sur les figures, la seconde ligne de défense de l'assemblage de pénétration électrique 100 est formée par le barreau électrique interne 120 et les connecteurs étanches 130, 150 qui résistent aux conditions du liquide primaire ainsi que par le limiteur de débit de fuite potentielle formé par le bossage périphérique 123 de l'enveloppe externe 121 qui permet de minimiser et de maîtriser le débit de fuite potentielle de liquide primaire.

Une telle architecture permet ainsi d'avoir des connecteurs étanches 130, 150 résistant aux conditions du liquide primaire (i.e. aux conditions de température et de pression du liquide primaire) sans toutefois répondre à la réglementation de conception, de fabrication et d'inspection périodique des éléments constituant la seconde barrière de confinement, ce qui permet d'utiliser avantageusement un connecteur étanche de conception simple, facile à connecter et/ou à déconnecter, et d'éviter une inspection périodique des connecteurs étanches 130, 150.

En effet, la continuité de la seconde barrière de confinement est assurée par l'enveloppe 210 de l'actionneur 200 ainsi que par le tube d'accostage 110 de l'assemblage de pénétration électrique 100.

Avantageusement, les matériaux utilisés pour réaliser l'étanchéité des connecteurs étanches 130, 150 sont différents. Ainsi par exemple, il est possible d'utiliser un connecteur isolant 130 avec une technologie céramique et un connecteur isolant 150 utilisant une technologie de vitrocéramique précontrainte.

La figure 2 illustre une vue en section d'une partie de cuve d'un réacteur nucléaire présentant un deuxième mode de réalisation d'un assemblage de pénétration électrique de cuve 300 selon l'invention. Ce second mode de réalisation est identique au premier mode de réalisation décrit précédemment à l'exception des éléments qui vont être décrits dans les paragraphes suivants.

Dans ce deuxième mode de réalisation, le bossage périphérique 123 faisant office de limiteur de débit de fuite de liquide primaire à l'intérieur du tube d'accostage 110 est remplacé par la mise en place d'une part d'un moyen d'étanchéité 125 réalisant une étanchéité entre le barreau électrique 320 et la cuve (ou le tube d'accostage 110), et d'autre part d'une cellule de détection de fuite (non représenté), typiquement formé par un détecteur de pression à l'intérieur du tube d'accostage 110. Le détecteur de pression à l'intérieur du tube d'accostage est ainsi capable de détecter une défaillance d'étanchéité de l'actionneur et/ou de la liaison étanche 220 entre l'actionneur 200 et l'assemblage de pénétration électrique et/ou encore de l'assemblage de pénétration électrique 300 lui-même. Cette disposition correspond à une approche de défense en profondeur sur les fuites potentielles de la V-EPA, pour laquelle l'extension de seconde barrière 110 est une première ligne d'étanchéité surveillée, le moyen d'étanchéité 125 est une seconde ligne d'étanchéité sollicitée en cas de défaillance de la première.

Enfin, selon une alternative de réalisation, il est également possible d'intégrer les deux dispositions architecturales décrites précédemment dans les deux modes de réalisation précédents pour limiter et maitriser davantage la fuite de liquide primaire en cas de défaillance de l'extension de seconde barrière. Ainsi, la combinaison de ces dispositions permet d'avoir une extension de seconde barrière formée par le tube d'accostage 110 formant une première ligne d'étanchéité surveillée, un moyen d'étanchéité 125 formant une seconde ligne d'étanchéité sollicitée en cas de défaillance de la première et enfin un limiteur de fuite 123 constituant une ultime ligne de limitation des conséquences de la défaillance des deux premières lignes.

La figure 3 illustre une vue en section d'une partie de cuve d'un réacteur nucléaire présentant un troisième mode de réalisation d'un assemblage de pénétration électrique de cuve 400 selon l'invention. Ce troisième exemple de réalisation est identique au premier mode de réalisation décrit précédemment à la figure 1 à l'exception des éléments qui vont être décrits dans les paragraphes suivants.

Dans ce troisième mode de réalisation, l'assemblage de pénétration électrique de cuve 400 comporte un tube d'accostage 410 inséré par l'intérieur de la cuve 10. Le tube d'accostage 410 comporte une virole 411 apte à être solidarisée mécaniquement via des moyens de maintien (non représenté) à l'intérieur de la cuve 10. Il est également prévu des moyens d'étanchéité 115 ad-hoc entre la paroi interne de la cuve 10 et le tube d'accostage 110, et plus particulièrement la virole 411, permettant de réaliser une étanchéité entre la cuve 10 et le tube d'accostage 110 lors de son montage. Les moyens de maintien mécanique et les moyens d'étanchéité sont formés par exemple par une soudure, par soudage de la virole 411 sur la paroi interne de la cuve 10.

Ce troisième mode de réalisation a été illustré à titre d'exemple avec un bossage périphérique 123 au niveau du barreau électrique 120 comme décrit précédemment à la figure 1. Toutefois, ce montage du tube d'accostage 410 par l'intérieur de la cuve 10 est également réalisable avec le mode de réalisation du barreau électrique 320 décrit à la figure 2.

Selon un autre mode de réalisation de l'invention (non représenté), il est prévu que le barreau électrique 120, 320 ou du moins l'enveloppe externe 121 présente une zone de souplesse de manière identique au tube d'accostage 110, 410 autorisant ainsi une certaine flexibilité du barreau électrique 120, et donc de l'assemblage de pénétration électrique 100, 300, 400 dans son ensemble, à l'intérieur de la cuve 10 du réacteur nucléaire.

## Revendications

1. Assemblage de pénétration électrique (100, 300, 400) de cuve apte à être installé dans une traversée (20) d'une cuve (10) d'un réacteur nucléaire, ledit assemblage de pénétration électrique (100, 300, 400) étant **caractérisé en ce qu'**il comporte :
- un tube d'accostage (110, 410) apte à former une extension de la seconde barrière de confinement du réacteur nucléaire, ledit tube d'accostage (110) comportant :
- une première extrémité (111) apte à être positionnée à l'intérieur de la cuve et apte à être raccordée mécaniquement et de manière étanche à un aboutissant (200) à l'intérieur de ladite cuve (10) ;
- une deuxième extrémité (112) apte à être solidarisée mécaniquement et de manière étanche à la cuve (10) ;
- un barreau électrique (120, 320) étanche traversant ledit tube d'accostage (110, 410) et présentant de part et d'autre des connecteurs étanches (130, 150) assurant une liaison électrique entre ledit aboutissant (200) et l'extérieur dudit réacteur ; ledit barreau électrique étanche (120, 320) présentant des moyens (123, 125) pour limiter une fuite de liquide primaire à l'extérieur de la cuve en cas de défaillance de ladite extension de seconde barrière de confinement ;
- des moyens de maintien mécanique (140) pour solidariser aux conditions de pression requises, ledit barreau électrique (120, 320) à ladite cuve (10).

2. Assemblage de pénétration électrique (100) de cuve d'un réacteur nucléaire selon la revendication précédente **caractérisé en ce que** le barreau électrique (120) comporte une enveloppe externe (121) présentant une excroissance périphérique (123) dont l'encombrement externe est dimensionné de manière à minimiser l'espace entre le tube d'accostage (110, 410) et le barreau électrique (120), l'excroissance périphérique (123) formant lesdits moyens pour limiter le débit de fuite de liquide primaire entre le tube d'accostage (110, 410) et le barreau électrique (120) en cas de défaillance de ladite extension de seconde barrière de confinement.

3. Assemblage de pénétration électrique (100) de cuve d'un réacteur nucléaire selon la revendication précédente **caractérisé en ce que** l'excroissance périphérique (123) est positionnée de manière à limiter le débit de fuite de liquide primaire au niveau de la traversée (20) de la cuve (10).

4. Assemblage de pénétration électrique (100) de cuve d'un réacteur nucléaire selon la revendication 1 **caractérisé en ce que** les moyens (125) pour limiter une fuite de liquide primaire à l'extérieur de la cuve en cas de défaillance de ladite extension de seconde barrière de confinement sont formés par un moyen d'étanchéité (125) agencé entre la cuve (10) et le barreau électrique (320) et par un moyen de détection de l'augmentation de pression à l'intérieur du tube d'accostage (110, 410).

5. Assemblage de pénétration électrique (100) de cuve d'un réacteur nucléaire selon l'une des revendications précédentes **caractérisé en ce que** le tube d'accostage (110, 410) présente un diamètre interne supérieur à 30mm.

6. Assemblage de pénétration électrique (100) de cuve d'un réacteur nucléaire selon l'une des revendications précédentes **caractérisé en ce que** lesdits connecteurs étanches (130, 150) du barreau électrique (120) présentent un isolant en céramique ou un isolant en vitrocéramique précontrainte.

7. Assemblage de pénétration électrique (100) de cuve d'un réacteur nucléaire selon l'une des revendications précédentes **caractérisé en ce que** le tube d'accostage (110, 410) comporte au moins une partie rigide et une partie flexible (113) apte à se déformer au moins selon une direction.

8. Assemblage de pénétration électrique (100) de cuve d'un réacteur nucléaire selon l'une des revendications précédentes **caractérisé en ce que** ledit tube d'accostage (110) est solidarisé mécaniquement et de manière étanche à l'extérieure de ladite cuve (10).

9. Assemblage de pénétration électrique (100) de cuve d'un réacteur nucléaire selon l'une des revendications 1 à 7 **caractérisé en ce que** ledit tube d'accostage (410) est solidarisé mécaniquement et de manière étanche à l'intérieur de ladite cuve (10).

10. Assemblage de pénétration électrique (100) de cuve d'un réacteur nucléaire selon l'une des revendications précédentes **caractérisé en ce que** le tube d'accostage (110, 410) est démontable.

11. Assemblage de pénétration électrique (100) de cuve d'un réacteur nucléaire selon l'une des revendications précédentes **caractérisé en ce que** le barreau électrique (120, 320) comporte une enveloppe externe (121), l'enveloppe externe (121) présentant au moins une partie rigide et une partie flexible apte à se déformer au moins selon une direction.

12. Cuve de réacteur nucléaire **caractérisée en ce qu'**elle comporte au moins un assemblage de pénétration électrique (100, 300, 400) selon l'une des revendications précédentes.

13. Réacteur nucléaire **caractérisé en ce qu'**il comporte une cuve (10) selon la revendication précédente.

14. Réacteur nucléaire selon la revendication précédente **caractérisé en ce que** ledit réacteur nucléaire est un réacteur intégré ou un petit réacteur modulaire.

## Patentansprüche

1. Elektrische Eindringgruppe (100, 300, 400) in ein Becken, die geeignet ist, in eine Durchführung (20) eines Beckens (10) eines Nuklearreaktors eingebaut zu werden, wobei die genannte elektrische Eindringgruppe (100, 300, 400) **dadurch gekennzeichnet ist, dass** sie umfasst:
- ein Zusammenführrohr (110, 410), das geeignet ist, eine Erweiterung der zweiten Sperre des Nuklearreaktors zu bilden, wobei das genannte Zusammenführ-Rohr (110) umfasst:
- ein erstes Ende (111), das geeignet ist, im Innern des Beckens positioniert zu sein und geeignet ist, mechanisch abgedichtet an einer Grenze (200) im Innern des genannten Beckens (10) angeschlossen zu sein;
- ein zweites Ende (112), das geeignet ist, mechanisch und abgedichtet fest am Becken (10) befestigt zu sein;
- einen abgedichteten elektrischen Stab (120, 320), der das genannte Zusammenführ-Rohr (110, 410) durchquert und abgedichtete Konnektoren (130, 150) auf jeder Seite aufweist, die eine elektrische Verbindung zwischen der genannten Grenze (200) und der Außenseite des genannten Reaktors gewährleisten; wobei der genannte abgedichtete elektrische Stab (120, 320) Mittel (123, 125) zum Begrenzen eines Lecks der primären Flüssigkeit an der Außenseite des Beckens für den Fall eines Ausfalls der genannten Erweiterung der zweiten Sperre aufweist;
- mechanische Haltemittel (140) zum festen Befestigen des genannten elektrischen Stabs (120, 320) an dem genannten Becken (10) unter den erforderlichen Druckbedingungen.

2. Elektrische Eindringgruppe (100) in ein Becken eines Nuklearreaktors gemäß dem voranstehenden Anspruch, **dadurch gekennzeichnet, dass** der elektrische Stab (120) eine äußere Hülle (121) umfasst, die einen umlaufenden Vorsprung (123) aufweist, dessen äußerer Platzbedarf derart ausgelegt ist, dass der Raum zwischen dem Zusammenführ-Rohr (110, 410) und dem elektrischen Stab (120) minimiert ist, wobei der umlaufende Vorsprung (123) die genannten Mittel bildet, um den Leckdurchsatz der primären Flüssigkeit zwischen dem Zusammenführ-Rohr (110, 410) und dem elektrischen Stab (120) für den Fall eines Ausfalls der genannten Erweiterung der zweiten Sperre zu begrenzen.

3. Elektrische Eindringgruppe (100) in ein Becken eines Nuklearreaktors gemäß dem voranstehenden Anspruch, **dadurch gekennzeichnet, dass** der umlaufende Vorsprung (123) derart positioniert ist, dass er den Leckdurchsatz der primären Flüssigkeit an der Durchführung (20) des Beckens (10) begrenzt.

4. Elektrische Eindringgruppe (100) in ein Becken eines Nuklearreaktors gemäß Anspruch 1, **dadurch gekennzeichnet, dass** die Mittel (125) zum Begrenzen eines Lecks einer primären Flüssigkeit an der Außenseite des Beckens für den Fall eines Ausfalls der genannten Erweiterung der zweiten Sperre durch ein Abdichtmittel (125), das zwischen dem Becken (10) und dem elektrischen Stab (320) angeordnet ist, und durch ein Erkennungsmittel der Druckerhöhung im Innern des Zusammenführ-Rohrs (110, 410) gebildet sind.

5. Elektrische Eindringgruppe (100) in ein Becken eines Nuklearreaktors gemäß einem der voranstehenden Ansprüche, **dadurch gekennzeichnet, dass** das Zusammenführ-Rohr (110, 410) einen Innendurchmesser von mehr als 30 mm aufweist.

6. Elektrische Eindringgruppe (100) in ein Becken eines Nuklearreaktors gemäß einem der voranstehenden Ansprüche, **dadurch gekennzeichnet, dass** die genannten abgedichteten Konnektoren (130, 150) des elektrischen Stabs (120) einen Isolator aus Keramik oder einen Isolator aus vorgespannter Glaskeramik aufweisen.

7. Elektrische Eindringgruppe (100) in ein Becken eines Nuklearreaktors gemäß einem der voranstehenden Ansprüche, **dadurch gekennzeichnet, dass** das Zusammenführ-Rohr (110, 410) wenigstens einen steifen Teil und einen flexiblen Teil (113) umfasst, der geeignet ist, sich wenigstens gemäß einer Richtung zu verformen.

8. Elektrische Eindringgruppe (100) in ein Becken eines Nuklearreaktors gemäß einem der voranstehenden Ansprüche, **dadurch gekennzeichnet, dass** das genannte Zusammenführ-Rohr (110) mechanisch fest und abgedichtet an der Außenseite des genannten Beckens (10) befestigt ist.

9. Elektrische Eindringgruppe (100) in ein Becken eines Nuklearreaktors gemäß einem der Ansprüche 1 bis 7, **dadurch gekennzeichnet, dass** das genannte Zusammenführ-Rohr (410) mechanisch fest und abgedichtet im Innern des genannten Beckens (10) befestigt ist.

10. Elektrische Eindringgruppe (100) in ein Becken eines Nuklearreaktors gemäß einem der voranstehenden Ansprüche, **dadurch gekennzeichnet, dass** das Zusammenführ-Rohr (110, 410) abnehmbar ist.

11. Elektrische Eindringgruppe (100) in ein Becken eines Nuklearreaktors gemäß einem der voranstehenden Ansprüche, **dadurch gekennzeichnet, dass** der elektrische Stab (120, 320) eine äußere Hülle (121) umfasst, wobei die äußere Hülle (121) wenigstens einen steifen Teil und einen flexiblen Teil aufweist, der geeignet ist, sich wenigstens gemäß einer Richtung zu verformen.

12. Becken eines Nuklearreaktors, **dadurch gekennzeichnet, dass** es wenigstens eine elektrische Eindringgruppe (100, 300, 400) gemäß einem der voranstehenden Ansprüche umfasst.

13. Nuklearreaktor, **dadurch gekennzeichnet, dass** er ein Becken (10) gemäß dem voranstehenden Anspruch umfasst.

14. Nuklearreaktor gemäß dem voranstehenden Anspruch, **dadurch gekennzeichnet, dass** der genannte Nuklearreaktor ein integrierter Reaktor oder ein kleiner modularer Reaktor ist.

## Claims

1. Vessel electrical penetration assembly (100, 300, 400) capable of being installed in a penetration (20) of a vessel (10) of a nuclear reactor, said electrical penetration assembly (100, 300, 400) being **characterised in that** it comprises:
- a docking tube (110, 410) capable of forming an extension of the second containment barrier of the nuclear reactor, said docking tube (110) comprising:
- a first end (111) capable of being positioned inside the vessel and capable of being connected mechanically and in a leaktight manner to an abuttal (200) inside said vessel (10);
- a second end (112) capable of being made integral mechanically and in a leaktight manner with the vessel (10);
- a leaktight electrical bar (120, 320) passing through said docking tube (110, 410) and having on either side leaktight connectors (130, 150) ensuring an electrical connection between said abuttal (200) and the outside of said reactor; said leaktight electrical bar (120, 320) having means (123, 125) for limiting leakage of primary liquid outside of the vessel in the event of failure of said second containment barrier extension;
- mechanical maintaining means (140) for making said electrical bar (120, 320) integral with said vessel (10), at the required pressure conditions.

2. Vessel electrical penetration assembly (100) for a nuclear reactor according to the preceding claim **characterised in that** the electrical bar (120) comprises an outer envelope (121) having a peripheral protrusion (123) of which the external size is dimensioned so as to minimise the space between the docking tube (110, 410) and the electrical bar (120), the peripheral protrusion (123) forming said means for limiting the rate of leakage of primary liquid between the docking tube (110, 410) and the electrical bar (120) in the event of failure of said second containment barrier extension.

3. Vessel electrical penetration assembly (100) for a nuclear reactor according to the preceding claim **characterised in that** the peripheral protrusion (123) is positioned so as to limit the rate of leakage of primary liquid at the level of the penetration(20) of the vessel (10).

4. Vessel electrical penetration assembly (100) for a nuclear reactor according to claim 1 **characterised in that** the means (125) for limiting leakage of primary liquid outside of the vessel in the event of failure of said second containment barrier extension are formed by a sealing means (125) arranged between the vessel (10) and the electrical bar (320) and by a means of detecting the increase in pressure inside the docking tube (110, 410).

5. Vessel electrical penetration assembly (100) for a nuclear reactor according to one of the preceding claims **characterised in that** the docking tube (110, 410) has an internal diameter greater than 30mm.

6. Vessel electrical penetration assembly (100) for a nuclear reactor according to one of the preceding claims **characterised in that** said leaktight connectors (130, 150) of the electrical bar (120) have an insulator made of ceramic or an insulator made of pre-stressed vitroceramic.

7. Vessel electrical penetration assembly (100) for a nuclear reactor according to one of the preceding claims **characterised in that** the docking tube (110, 410) comprises at least one rigid part and one flexible part (113) capable of deforming at least along one direction.

8. Vessel electrical penetration assembly (100) for a nuclear reactor according to one of the preceding claims **characterised in that** said docking tube (110) is made integral mechanically and in a leaktight manner with the outside of said vessel (10).

9. Vessel electrical penetration assembly (100) for a nuclear reactor according to one of claims 1 to 7 **characterised in that** said docking tube (410) is made integral mechanically and in a leaktight manner with the inside of said vessel (10).

10. Vessel electrical penetration assembly (100) for a nuclear reactor according to one of the preceding claims **characterised in that** the docking tube (110, 410) can be dismantled.

11. Vessel electrical penetration assembly (100) for a nuclear reactor according to one of the preceding claims **characterised in that** the electrical bar (120, 320) comprises an outer envelope (121), the outer envelope (121) having at least one rigid part and one flexible part capable of deforming at least along one direction.

12. Nuclear reactor vessel **characterised in that** it comprises at least one electrical penetration assembly (100, 300, 400) according to one of the preceding claims.

13. Nuclear reactor **characterised in that** it comprises a vessel (10) according to the preceding claim.

14. Nuclear reactor according to the preceding claim **characterised in that** said nuclear reactor is an integrated reactor or a small modular reactor.
